# EUROPEAN PATENT APPLICATION

(11) **EP 4 299 382 A1**
(43) Date of publication of application: **03.01.2024**
(21) Application number: 22783855.4
(22) Date of filing: 17.03.2022
(51) Int. Cl.: B60R 11/00, G01S 7/02

(54) **VEHICLE-MOUNTED RADAR ADJUSTING DEVICE AND VEHICLE-MOUNTED RADAR DEVICE**

(30) Priority: 07.04.2021 CN 202110372134
(71) Applicant: Autel Intelligent Technology Corp., Ltd., Shenzhen, Guangdong 518055 (CN)
(72) Inventor: LU, Yi, Shenzhen, Guangdong 518055 (CN); LIN, Zhongshan, Shenzhen, Guangdong 518055 (CN)
(74) Representative: Harris, Oliver John Richard
(86) International application number: PCT/CN2022/081405
(87) International publication number: WO 2022/213786

(57) **Abstract**

A vehicle-mounted radar adjusting device and a vehicle-mounted radar device. The vehicle-mounted radar device comprises a vehicle-mounted radar adjusting device (100) and a radar (200); the vehicle-mounted radar device is used for installing the radar (200); the vehicle-mounted radar adjusting device (100) comprises a first mounting plate (11), a second mounting plate (12), movable portions (21), driving portions (22), and a controller (30); the second mounting plate (12) is spaced apart from the first mounting plate (11) in a vertical direction; one end of each movable portion (21) is movably connected to the second mounting plate (12); the other end of the movable portion (21) is connected to the driving portion (22); the controller (30) is electrically connected to the driving portion (22); and the controller (30) can control the driving portion (22) to drive the movable portion (21) to drive the second mounting plate (12) to rotate about a horizontal direction relative to the first mounting plate (11), so as to adjust a horizontal angle of the radar (200).

## Description

This application claims the priority of a Chinese patent application filed with the Chinese Patent Office on April 7, 2021, with application number 202110372134.6 and the title "Vehicle-mounted radar adjusting device and vehicle-mounted radar device", all of which are incorporated by reference herein.

### TECHNICAL FIELD

The present invention relates to the field of vehicle-mounted radar technology, in particular to a vehicle-mounted radar adjusting device and a vehicle-mounted radar device.

### BACKGROUND

At present, the mechanical angle of vehicle-mounted radar is fixed after being loaded, and the compensated angle range of the software is reduced, resulting in the radar not adaptively adjusting and compensating the corresponding horizontal angle when the vehicle body is fully loaded can change the tilt angle of the vehicle body. Therefore, the adjusting device is needed to adjust the angle of radar, so as to ensure the accuracy of radar installation.

### SUMMARY

In order to solve the above technical problem, an embodiment of the present invention provides a vehicle-mounted radar adjusting device and a vehicle-mounted radar device that can automatically adjust the angle of the radar.

The embodiment of the present invention solves its technical problems by adopting the following technical solution:

In a first aspect, provided is a vehicle-mounted radar adjusting device including:
a first mounting plate configured to be mounted to a vehicle body;
a second mounting plate spaced apart from the first mounting plate in a vertical direction, the second mounting plate being used for installing the vehicle-mounted radar, and the vertical direction referring to a direction perpendicular to the first mounting plate;
at least one adjusting assembly, the adjusting assembly being respectively connected to the first mounting plate and the second mounting plate, the adjusting assembly being movably connected to the second mounting plate, the adjusting assembly being able to cause the second mounting plate to rotate about an axis in a horizontal direction so as to adjust a pitch angle of the second mounting plate relative to the first mounting plate; wherein the horizontal direction refers to a direction parallel to a plane in which the first mounting plate is located; and
a controller, the controller being mounted to the first mounting plate, the controller being electrically connected to the adjusting assembly, the controller being used for controlling the adjusting assembly to cause the second mounting plate to rotate about the axis in the horizontal direction.

Optionally, the number of the adjusting assemblies is determined by the shape of the second mounting plate.

Optionally, the number of the adjusting assemblies is the same as the number of corners included in the shape of the second mounting plate, and the adjusting assemblies are respectively provided on corners of one face of the second mounting plate.

Optionally, at least one side of the second mounting plate is provided with the adjusting assembly.

Optionally, at least two of the adjusting assemblies are provided on one side of the second mounting plate, and a connecting line between the at least two adjusting assemblies forms an axis in the horizontal direction.

Optionally, the adjusting assembly comprises a driving portion and movable portions, the driving portion being connected to the first mounting plate, the movable portion being connected to the second mounting plate, the driving portion being used for moving the movable portion relative to the second mounting plate to cause the second mounting plate to rotate about the axis in the horizontal direction.

Optionally, the movable portion includes a rotating mechanism and a moving mechanism, the moving mechanism being connected to the rotating mechanism;
the rotating mechanism is further rotatably connected to the second mounting plate, and the moving mechanism is further connected to the driving portion; and
the driving portion drives the moving mechanism to move in a vertical direction and causes the second mounting plate to rotate via the rotating mechanism.

Optionally, the rotating mechanism comprises a universal ball bearing mounted to the second mounting plate.

Optionally, the universal ball bearing comprises an outer race and a roller rotatably provided inside the outer race; and
the outer race is connected to the second mounting plate and the roller is connected to the moving mechanism.

Optionally, the moving mechanism comprises a lead screw nut and a lead screw sleeved on the lead screw;
the lead screw nut is connected to the rotating mechanism, and the lead screw is connected to the driving portion; and
the driving portion may drive the lead screw to rotate and cause the lead screw nut to move in the vertical direction.

Optionally, the driving portion is a motor powertrain.

Optionally, the vehicle-mounted radar adjusting device further comprises an angle sensor electrically connected to the controller;
the angle sensor is configured to detect radar angle change information and transmit the information to the controller.

Alternatively, the angle sensor is provided in the vehicle-mounted radar or on a certain face of the vehicle-mounted radar.

Alternatively, the controller is configured to determine whether the angle of the vehicle-mounted radar needs to be adjusted after processing the radar angle change information detected by the angle sensor.

Optionally, the controller is further used for further determining an adjustment value of the angle of the vehicle-mounted radar to be adjusted when the angle of the vehicle-mounted radar needs to be adjusted, and controlling the adjusting assembly to cause the second mounting plate to rotate to the adjustment value;
wherein the adjustment value is an angle of rotation of the second mounting plate about the axis in the horizontal direction.

In a second aspect, provided is a vehicle-mounted radar device including:
a vehicle-mounted radar;
the vehicle-mounted radar adjusting device according to any one of the preceding claims, the vehicle-mounted radar being mounted on a face of the second mounting plate facing away from the first mounting plate.

Optionally, the radar is locked to the second mounting plate through a fastener.

With respect to the prior art, the first mounting plate in the present embodiment can be mounted on a vehicle body; the second mounting plate is used for mounting a radar; two ends of the movable portion are respectively connected to the second mounting plate and a driving portion; the controller is electrically connected to the driving portion, and the controller can control the driving portion so as to drive the movable portion to cause the second mounting plate to rotate about a horizontal direction with respect to the first mounting plate, thereby adjusting the horizontal angle of the radar.

### BRIEF DESCRIPTION OF THE DRAWINGS

One or more embodiments are illustrated by way of example in the accompanying drawings, which are not to be construed as limiting the embodiments, in which elements having the same reference numeral designations represent similar elements, and in which the figures are not to scale unless otherwise specified.
FIG. 1 is a structural schematic diagram of a vehicle-mounted radar device provided by an embodiment of the present invention;
FIG. 2 is a structural schematic diagram of a vehicle-mounted radar adjusting device of the vehicle-mounted radar device shown in FIG. 1;
FIG. 3 is a cross-sectional schematic diagram of the vehicle-mounted radar adjusting device shown in FIG. 2;
FIG. 4 is an exploded schematic diagram of a movable portion of the vehicle-mounted radar adjusting device shown in FIG. 2; and
FIG. 5 is a structural schematic diagram of another state of the vehicle-mounted radar adjusting device shown in FIG. 2.

### DETAILED DESCRIPTION OF THE INVENTION

In order to facilitate the understanding of the present invention, a more detailed explanation will be provided below in conjunction with the accompanying drawings and specific embodiments. It should be noted that when an element is referred to as being "fixed to" another element, it can be directly on another element, or one or more intermediate components can exist therebetween. When an element is referred to as being "connected to" another component, it can be directly connected to another element, or one or more intermediate components can exist therebetween. The terms "vertical", "horizontal", "left", "right", "inner", "outer", and the like are used herein for descriptive purposes only.

Unless otherwise defined, all technical and scientific terms used in this specification have the same meanings as those commonly understood by those skilled in the technical field of the present invention. The terminology used in the description of the invention herein is for the purpose of describing particular embodiments only and is not intended to be limiting to the present invention. The term 'and/or' used herein includes any and all combinations of one or more related listed items.

In addition, the technical features involved in the different embodiments of the present invention described below can be combined with each other as long as they do not conflict with each other.

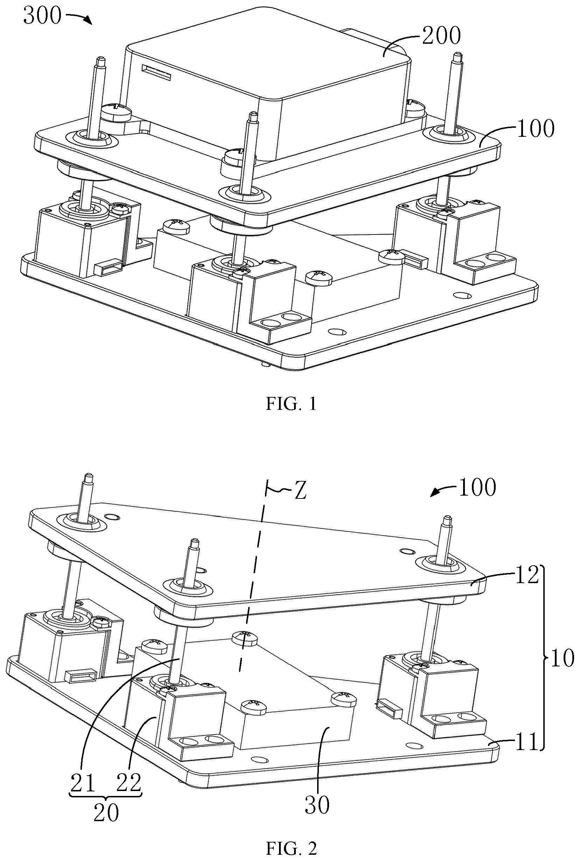

Referring to FIGs. 1 and 2 together, an embodiment of the present invention provides a vehicle-mounted radar adjusting device 100 for installing a vehicle-mounted radar 200. The vehicle-mounted radar adjusting device 100 includes a mounting plate assembly 10, at least one adjusting assembly 20, and a controller 30. The adjusting assembly 20 and the controller 30 are respectively mounted to the mounting plate assembly 10. The adjusting assembly 20 and the controller 30 are electrically connected.

The mounting plate assembly 10 includes a first mounting plate 11 and a second mounting plate 12 that are spaced apart in a vertical direction Z. A face of the first mounting plate 11 facing away from the second mounting plate 12 is mounted on a predetermined mounting position of the vehicle body. The adjusting assembly 20 and the controller 30 are respectively mounted on the first mounting plate 11. The vehicle-mounted radar 200 is provided on a face of the second mounting plate 12 facing away from the first mounting plate 11. The vehicle-mounted radar 200 is locked to the second mounting plate 12 by a fastener. The second mounting plate 12 is connected to the adjusting assembly 20, and the adjusting assembly 20 can cause the second mounting plate 12 to rotate relative to the first mounting plate 11 about an axis in a horizontal direction, thereby adjusting the angle of the vehicle-mounted radar 200 relative to the horizontal direction. Wherein the vertical direction Z and the horizontal direction are perpendicular to each other. The vertical direction Z is a direction perpendicular to the first mounting plate 11, and the horizontal direction is a direction parallel to the first mounting plate 11.

It will be appreciated that in some implementations, the first mounting plate 11 may also be a plane on which a predetermined mounting position of the vehicle body is located, and the driving portion 22 and the controller 30 may be mounted directly on the plane on which the predetermined mounting position of the vehicle body is located.

It will be appreciated that in some embodiments, the second mounting plate 12 may also be a housing for the vehicle-mounted radar 200. The vehicle-mounted radar 200 is directly connected to the movable portion 21. The movable portion 21 can cause the vehicle-mounted radar 200 to rotate relative to the first mounting plate 11, thereby adjusting the angle of the vehicle-mounted radar 200.

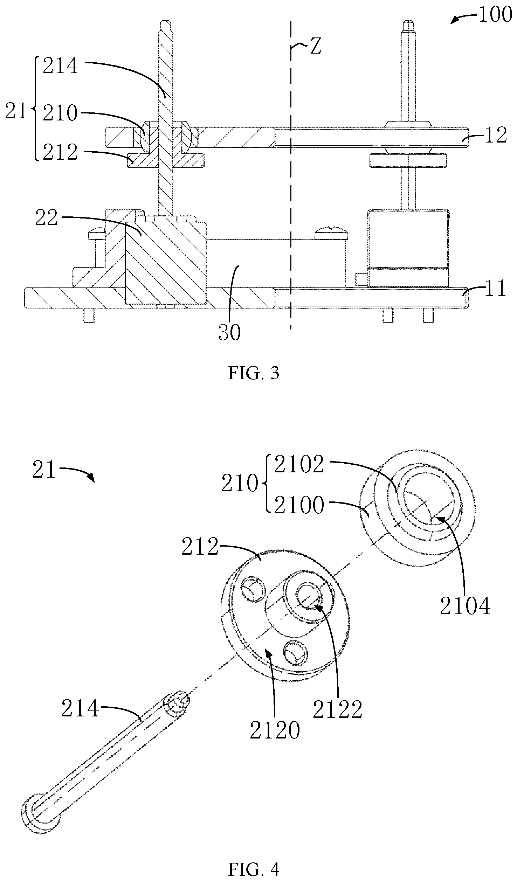

Referring to FIGs. 2-4 together, the adjusting assembly 20 includes a movable portion 21 and a driving portion 22 connected to the driving portion 22. The movable portion 21 is connected to the second mounting plate 12. The driving portion 22 is connected to the first mounting plate 11. The driving portion 22 is used for driving the movable portion 21 to move relative to the second mounting plate 12 so as to cause the second mounting plate 12 to rotate about the axis in the horizontal direction.

One end of the movable portion 21 is movably connected to the second mounting plate 12, and the other end of the movable portion 21 is connected to the driving portion 22. The movable portion 21 includes a rotating mechanism rotatably connected to the second mounting plate 12, and a moving mechanism having one end connected to the rotating mechanism and the other end connected to the driving portion 22. The driving portion 22 drives the moving mechanism to move in the vertical direction Z, and the moving mechanism rotates the second mounting plate 12 via the rotating mechanism. In this embodiment, the rotating mechanism includes a universal ball bearing 210. The moving mechanism includes a lead screw nut 212 and a lead screw 214, the lead screw nut 212 connecting the universal ball bearing 210 and the lead screw 214, respectively.

The universal ball bearing 210 includes an outer race 2100 and a roller 2102. The roller is rotatably provided inside the outer race 2100 and rotatable in any direction with respect to the outer race 2100. The roller 2102 is provided with an inner bore 2104 for mounting the lead screw nut 212. The universal ball bearing 210 is mounted on the second mounting plate 12. A mounting hole is provided on the second mounting plate 12, and the outer race 2100 is riveted in the mounting hole. It would be appreciated that the connection between the universal ball bearing 210 and the second mounting plate 12 could be provided according to practical requirements, such as welding, bonding, etc., as long as the outer race 2100 is fixed to the second mounting plate 120.

The lead screw nut 212 is a step nut. The lead screw nut 212 includes a large end and a small end, and a step face 2120 is provided between the large end and the small end of the lead screw nut 212. The small end of the lead screw nut 212 is riveted into the inner bore 2104 of the roller 2102, and the step face 2120 abuts an end of the roller 2102 facing the first mounting plate 11. The lead screw nut 212 is further provided with a threaded hole 2122 passing through the lead screw nut 212 in the vertical direction Z for connection with the lead screw 214.

The lead screw 214 is disposed in the vertical direction X. One end of the lead screw 214 is connected to the driving portion 22, and the other end of the lead screw 214 passes through the threaded hole 2122 of the lead screw nut 212. The surface of the lead screw 214 is provided with external threads adapted to the threaded hole 2122, and the lead screw 214 is in threaded engagement with the lead screw nut 212. The lead screw 214 is rotatable about the vertical direction X with respect to the lead screw nut 212, thereby causing the lead screw nut 212 to move along the lead screw 214. The lead screw nut 212 causes the second mounting plate 12 to move via the universal ball bearing 210.

It is to be understood that in some embodiments, the rotating mechanism may also be a universal ball, and the moving mechanism may also be a moving rod. The universal ball is connected to the moving rod. The universal ball is rotatably mounted to the second mounting plate 12. The moving rod is connected to the driving portion 22. The driving portion 22 directly drives the moving rod to move. The moving rod causes the second mounting plate 12 to rotate via the universal ball. Alternatively, the rotating mechanism and the moving mechanism may be realized by other structures, which are not limited thereto.

The driving portion 22 is fixed to the first mounting plate 11. The first mounting plate 11 is provided with a mounting groove 110. The driving portion 22 is provided in the mounting groove 110 and locked to the first mounting plate 11 by a fastener. The driving portion 22 is a motor powertrain. The driving portion 22 comprises a motor and a speed reducer (not shown). The motor is connected to the speed reducer, and the speed reducer is connected to the lead screw 214 of the movable portion 21. The motor can output torque, which is reduced in speed and increased in torque through the speed reducer, and then transmitted to the screw 214, thereby causing the screw 214 to rotate. It can be understood that the structure of the driving portion can be set according to actual requirements, such as a rotary hydraulic cylinder, a rotary pneumatic cylinder, etc. and only needs to be able to cause the rotation of the lead screw 214.

It is to be understood that in some embodiments, the driving portion 22 may also be a linear motor, a linear hydraulic cylinder, a linear pneumatic cylinder, etc. The driving portion 22 drives the moving mechanism of the movable portion 21 to make a linear movement, thereby causing the rotation of the second mounting plate 12.

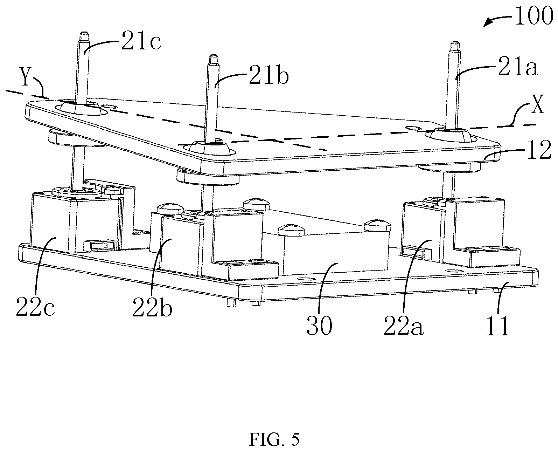

Referring to FIG. 5 together, it should be noted that the number of the adjusting assemblies 20 is determined according to the shape of the second mounting plate 12. The number of the adjusting assemblies 20 is the same as the number of corners included in the shape of the second mounting plate 12, and at least one of the adjusting assemblies 20 is provided on each corner of one face of the second mounting plate 12. Wherein at least one side of the second mounting plate 12 is provided with the adjusting assembly 20. Furthermore, at least two adjusting assemblies 20 are provided on one side of the second mounting plate 12, and an axis in a horizontal direction is formed between the at least two adjusting assemblies 20. Wherein the horizontal direction is perpendicular to the vertical direction Z.

In the present embodiment, taking the shape of the second mounting plate 12 as a triangle as an example, the number of the adjusting assemblies 20 is three, and three adjusting assemblies 20 are respectively provided at three corners of the second mounting plate 12. The connection lines between the three adjusting assemblies 20 form three axes in the horizontal direction. The three axes in the horizontal direction include a first horizontal axis and a second horizontal axis which are perpendicular to each other. The three adjusting assemblies 20 respectively cause the second mounting plate 12 to rotate about the first horizontal axis and the second horizontal axis so as to adjust the angle of the vehicle-mounted radar 200 relative to the horizontal direction. Three of the adjusting assemblies 20 are respectively connected between the first and second mounting plates 11 and 12, and the three adjusting assemblies 20 are respectively electrically connected to the controller 30.

Specifically, each of the three adjusting assemblies 20 includes a movable portion 21 and a driving portion 22, respectively. The three movable portions 21 are the first movable portion 21a, the second movable portion 21b, and the third movable portion 21c respectively. The three driving portions 22 are the first driving portion 22a, the second driving portion 22b, and the third driving portion 22c, respectively. The first driving portion 22a is connected to the first movable portion 21a, the second driving portion 22b is connected to the second movable portion 21b, and the third driving portion 22c is connected to the third movable portion 21c.

Each of the first movable portion 21a, the second movable portion 21b, and the third movable portion 21c includes the rotating mechanism and the moving mechanism. The first and second movable portions 21a and 21b are provided at both ends of the second mounting plate 12 in the first horizontal direction X, and the second and third movable portions 21b and 21c are provided at both ends of the second mounting plate 12 in the second horizontal direction Y. The connection line between the first and second movable portions 21a and 21b forms the first horizontal axis along the first horizontal direction X. The first and second movable portions 21a and 21b can cause the second mounting plate 12 to rotate about the first horizontal axis to adjust the horizontal angle of the vehicle-mounted radar 200. The connection line between the second and third movable portions 21b and 21c forms the second horizontal axis along the second horizontal direction Y. The second and third movable portions 21b and 21c can cause the second mounting plate 12 to rotate about the second horizontal axis to adjust another horizontal angle of the vehicle-mounted radar 200. Wherein the first horizontal direction X and the second horizontal direction Y are perpendicular to each other. The first horizontal direction X and the second horizontal direction Y are perpendicular to the vertical direction Z, respectively.

The first driving portion 22a, the second driving portion 22b, and the third driving portion 22c are respectively mounted to the first mounting plate 11. Wherein the first driving portion 22a is used for driving the first movable portion 21a, the second driving portion 22b is used for driving the second movable portion 21b, and the third driving portion 22c is used for driving the third movable portion 21c.

When the vehicle-mounted radar 200 needs to adjust an angle, the first and second driving portions 22a and 22b are started at the same time, drive the lead screws 214 of the first and second movable portions 21a and 21b to rotate forward or reverse at the same time, and cause the lead screw nuts 212 of the first movable portion 21a and the lead screw nut 212 of the second movable portion 21b to ascend or descend at the same time. The roller 2102 of the first movable portion 21a and the roller 2102 of the second movable portion 21b cause one end of the second mounting plate 12 which faces away from the third movable portion 21c to ascend or descend, and the outer race 2100 of each movable portion 21 causes the second mounting plate 12 to rotate relative to each roller 2102 so that the second mounting plate 12 rotates about the first horizontal axis. Alternatively, the second driving portion 22b and the third driving portion 22c are started at the same time, drive the lead screw 214 of the second movable portion 21b and the lead screw 214 of the third movable portion 21c rotate forward or reverse at the same time, and cause the lead screw nut 212 of the second movable portion 21b and the lead screw nut 212 of the third movable portion 21c to ascend or descend at the same time. The roller 2102 of the second movable portion 21b and the roller 2102 of the third movable portion 21c cause the second mounting plate 12 to ascend or descend away from one end of the first movable portion 21a, and the outer race 2100 of each movable portion 21 causes the second mounting plate 12 to rotate relative to each roller 2102 so that the second mounting plate 12 rotates about the second horizontal axis. The angle of the vehicle-mounted radar 200 with respect to the horizontal direction is adjusted by adjusting the second mounting plate 12 to rotate with respect to the first horizontal axis and the second horizontal axis, respectively. Wherein the forward rotation turns counterclockwise or clockwise about the vertical direction X, and the reverse rotation direction is opposite to the forward rotation direction.

Further, a line between three of the adjusting assemblies 20 forms three horizontal axes, and further includes a third horizontal axis formed by a line between the first and third movable portions 21a and 21c. The first driving portion 22a and the third driving portion 22c are started at the same time, and drive the first and third movable portions 21a and 21c to rotate forward or reverse at the same time so as to cause the second mounting plate 12 to rotate about the third horizontal axis so as to further adjust the angle of the vehicle-mounted radar 200 relative to the horizontal direction.

In some other embodiments, the shape of the second mounting plate can be set according to actual requirements, and the number of the adjusting assemblies can also be adjusted accordingly. For example, the second mounting plate is provided as a rectangle, and the number of the adjusting assemblies is correspondingly provided as four. Four of the adjusting assemblies are respectively provided at four corners of the second mounting plate, and connecting lines between four of the adjusting assemblies form at least four axes in the horizontal direction so that the second mounting plate can rotate about at least four axes in the horizontal direction respectively. Alternatively, the second mounting plate is provided as a pentagon, hexagon, etc. and the number of the adjusting assemblies is correspondingly set to five, six, etc. to adjust the plurality of horizontal angles of the second mounting plate.

In some other embodiments, the number of adjusting assemblies 20 may also be greater than the number of corners included in the shape of the second mounting plate 12, such that at least two of the adjusting assemblies 20 are provided on one side of the second mounting plate 12. For example, when the second mounting plate is triangular, the number of the adjusting assemblies may be four. Three of the adjusting assemblies are respectively arranged at three corners of the second mounting plate. The connection lines between the three of the adjusting assemblies respectively form three horizontal axes. The other one of the adjusting assemblies is arranged between two adjusting assemblies arranged along one of the horizontal axes. The four adjusting assemblies respectively cause the second mounting plate to rotate about the three horizontal axes, thereby adjusting the angle of the vehicle-mounted radar with respect to the horizontal direction.

In some other embodiments, the number of adjusting assemblies 20 may not correspond to the shape of the second mounting plate 12, e.g. the second mounting plate 12 may be provided as a circle, oval, etc. The number of adjusting assemblies 20 may be provided as at least two. The number of adjusting assemblies 20 is determined according to the number of rotational axes required for the second mounting plate 12. For example, when the second mounting plate only needs to rotate about one axis in the horizontal direction, the number of the adjusting assemblies may be at least two. At least two adjusting assemblies are respectively arranged on the second mounting plate in a first horizontal direction. A connecting line between at least two of the adjusting assemblies forms an axis of rotation in the first horizontal direction. One end of the second mounting plate facing away from at least two of the adjusting assemblies in the second horizontal direction is rotatably connected to the first mounting plate or the vehicle body. At least two of the adjusting assemblies ascend or descend at the same time, thereby causing the second mounting plate to rotate along a rotation axis in a first horizontal direction. Alternatively, the number of the adjusting assemblies can be set according to other practical requirements and only needs to be able to meet the angle adjustment requirements of the vehicle-mounted radar, which is not limited herein.

The controller 30 is mounted on the first mounting plate 11, and the controller 30 is locked to the first mounting plate 11 by a fastener. The controller 30 is electrically connected to the first driving portion 22a, the second driving portion 22b, and the third driving portion 22c, respectively. The controller 30 is used for controlling the first driving portion 22a, the second driving portion 22b, and the third driving portion 22c to start or stop, respectively. For example, the controller 30 may control the first and second driving portions 22a and 22b to start at the same time, thereby driving the first and second movable portions 21a and 21b to rotate at the same time. Alternatively, the controller 30 may control the second and the third driving portions 22b and 22c to be started at the same time, thereby driving the second and third movable portions 21b and 21c to rotate at the same time. Still alternatively, the controller 30 may control the first and third driving portions 22a and 22c to be started at the same time, thereby driving the first and third movable portions 21a and 21c to rotate simultaneously. It will be appreciated that in some embodiments, the controller 30 may control the start of one of the first, second, and third driving portions 22a, 22b, and 22c, respectively, to drive one of the first, second, and third movable portions 21a, 21b, and 21c to rotate, respectively.

In some embodiments, the vehicle-mounted radar adjusting device 100 further includes an angle sensor (not shown in the figures) electrically connected to the controller for detecting radar angle change information and transmitting it to the controller 30. The angle sensor may be provided in the vehicle-mounted radar 200, or the angle sensor may be provided on a certain face of the vehicle-mounted radar 200, or the angle sensor may be provided on the vehicle body. When the vehicle body is loaded, turned, uphill, or the like, the vehicle body is tilted, causing the vehicle-mounted radar 200 to follow the vehicle body to tilt so that the angle of the vehicle-mounted radar 200 in the horizontal direction changes with respect to a preset angle thereof. Wherein the radar angle change information is an angle change value of the vehicle-mounted radar 200.

The controller 30 determines whether the angle of the vehicle-mounted radar 200 needs to be adjusted after processing the radar angle change information detected by the angle sensor. When the controller 30 determines that it is necessary to adjust the angle of the vehicle-mounted radar 200, it further determines the adjustment value of the angle of the vehicle-mounted radar 200 that needs to be adjusted. The controller 30 controls the driving portion 22 to be started or stopped according to the value required to adjust the angle of the vehicle-mounted radar 200, so that the movable portion 21 causes the second mounting plate to rotate to the adjustment value, thereby adjusting the inclination angle of the vehicle-mounted radar 200 with respect to the horizontal direction, and ensuring the accuracy of the mounting angle of the vehicle-mounted radar 200. The adjustment value is an angular value of rotation of the second mounting plate about the axis in the horizontal direction.

In some embodiments, when rotation of the second mounting plate about the axis in the horizontal direction requires cooperation of at least two of the adjusting assemblies 20, the controller 30 may send synchronization control commands to the driving portions of at least two of the adjusting assemblies 20 to cause synchronize rotation of the movable portions of at least two of the adjusting assemblies 20.

Specifically, after the controller 30 determines that the adjustment value of the angle of the vehicle-mounted radar 200 needs to be adjusted, the controller 30 controls the first and second driving portions 22a and 22b to start synchronously according to the adjustment value, so as to drive the first and second movable portions 21a and 21b to rotate synchronously, thereby causing the second mounting plate 12 to rotate about the first horizontal axis; and/or the controller 30 controls the second driving portion 22b and the third driving portion 22c to start synchronously according to the adjustment value so as to drive the second and third movable portions 21b and 21c to rotate synchronously, thereby causing the second mounting plate 12 to rotate about the second horizontal axis. Wherein the adjustment value includes a value of an angle of rotation of the second mounting plate about the first horizontal axis and a value of an angle of rotation about the second horizontal axis.

In some embodiments, the controller 30 may also control the synchronous start of the first and third driving portions 22a and 22c according to the adjustment value to drive the synchronized rotation of the first and third movable portions 21a and 21c, thereby causing the second mounting plate 12 to rotate about a third horizontal axis. Wherein the adjustment value further includes an angular value of the rotation of the second mounting plate about the third horizontal axis.

Note that "electrically connected" in this embodiment means the communication of electrical signals between the two structures can be either a wired electrical connection via a cable or a radio connection via Bluetooth, WIFI modules, etc.

Referring back to FIG. 1, another embodiment of the present invention provides a vehicle-mounted radar device 300 including the vehicle-mounted radar adjusting device 100 according to any one of the above embodiments, and a vehicle-mounted radar 200 mounted to the vehicle-mounted radar adjusting device 100. The vehicle-mounted radar adjusting device 100 is used for adjusting the inclination angle of the vehicle-mounted radar 200.

In the present embodiment, the vehicle-mounted radar 200 uses a millimeter wave radar. The vehicle-mounted radar 200 is used for transmitting and receiving millimeter waves (millimeter electromagnetic waves) reflected by an obstacle, obtaining physical environment information (such as a relative distance, a relative speed, an angle, a movement direction, etc. between the vehicle body and other objects) around the vehicle body after processing, and providing an information condition for a vehicle body control system. The vehicle control system takes corresponding active safety measures or intervenes based on the feedback information from the radar body 20, ensuring safety and comfort during the driving process and reducing the probability of accidents. It will be appreciated that in some other embodiments, the vehicle-mounted radar 200 may also be an ultrasonic radar, a laser radar, or the like.

Finally, it should be noted that the above embodiments are only used to illustrate the technical solution of the present invention and not to limit it. Combinations of features in the above embodiments or in different embodiments are also possible within the spirit of the invention, the steps can be implemented in any order, and there are many other variations of the different aspects of the invention described above, which are not provided in detail for the sake of brevity. Although the present invention has been described in detail with reference to the foregoing embodiments, those skilled in the art will appreciate that: the technical solutions disclosed in the above-mentioned embodiments can still be amended, or some of the technical features thereof can be replaced by equivalents. Such modifications and substitutions do not depart from the spirit and scope of the embodiments of the present invention.

## Claims

1. A vehicle-mounted radar adjusting device, **characterized by** comprising:
a first mounting plate configured to be mounted to a vehicle body;
a second mounting plate spaced apart from the first mounting plate in a vertical direction, the second mounting plate being used for installing the vehicle-mounted radar, and the vertical direction referring to a direction perpendicular to the first mounting plate;
at least one adjusting assembly, the adjusting assembly being respectively connected to the first mounting plate and the second mounting plate, the adjusting assembly being movably connected to the second mounting plate, the adjusting assembly being able to cause the second mounting plate to rotate about an axis in a horizontal direction so as to adjust a pitch angle of the second mounting plate relative to the first mounting plate; wherein the horizontal direction refers to a direction parallel to a plane in which the first mounting plate is located; and
a controller, the controller being mounted to the first mounting plate, the controller being electrically connected to the adjusting assembly, the controller being used for controlling the adjusting assembly to cause the second mounting plate to rotate about the axis in the horizontal direction.

2. The vehicle-mounted radar adjusting device according to claim 1, **characterized in that**, the number of the adjusting assemblies is determined by the shape of the second mounting plate.

3. The vehicle-mounted radar adjusting device according to claim 2, **characterized in that**, the number of the adjusting assemblies is the same as the number of corners included in the shape of the second mounting plate, and the adjusting assemblies are respectively provided on corners of one face of the second mounting plate.

4. The vehicle-mounted radar adjusting device according to claim 2, **characterized in that**, at least one side of the second mounting plate is provided with the adjusting assembly.

5. The vehicle-mounted radar adjusting device according to claim 4, **characterized in that**, at least two of the adjusting assemblies are provided on one side of the second mounting plate, and a connecting line between the at least two adjusting assemblies forms an axis in the horizontal direction.

6. The vehicle-mounted radar adjusting device according to any one of claims 1-5, **characterized in that**, the adjusting assembly comprises a driving portion and movable portions, the driving portion being connected to the first mounting plate, the movable portion being connected to the second mounting plate, the driving portion being used for moving the movable portion relative to the second mounting plate to cause the second mounting plate to rotate about the axis in the horizontal direction.

7. The vehicle-mounted radar adjusting device according to claim 6, **characterized in that**, the movable portion includes a rotating mechanism and a moving mechanism, the moving mechanism being connected to the rotating mechanism;
the rotating mechanism is further rotatably connected to the second mounting plate, and the moving mechanism is further connected to the driving portion; and
the driving portion drives the moving mechanism to move in a vertical direction, and causes the second mounting plate to rotate via the rotating mechanism.

8. The vehicle-mounted radar adjusting device according to claim 7, **characterized in that**, the rotating mechanism comprises a universal ball bearing mounted to the second mounting plate.

9. The vehicle-mounted radar adjusting device according to claim 7, **characterized in that**, the universal ball bearing comprises an outer race and a roller rotatably provided inside the outer race; and
the outer race is connected to the second mounting plate and the roller is connected to the moving mechanism.

10. The vehicle-mounted radar adjusting device according to claim 7, **characterized in that**, the moving mechanism comprises a lead screw nut and a lead screw sleeved on the lead screw;
the lead screw nut is connected to the rotating mechanism, and the lead screw is connected to the driving portion; and
the driving portion may drive the lead screw to rotate and cause the lead screw nut to move in the vertical direction.

11. The vehicle-mounted radar adjusting device according to claim 7, **characterized in that**, the driving portion is a motor powertrain.

12. The vehicle-mounted radar adjusting device according to claim 1, **characterized by** further comprising an angle sensor electrically connected to the controller; and
the angle sensor is configured to detect radar angle change information and transmit the information to the controller.

13. The vehicle-mounted radar adjusting device according to claim 12, **characterized in that**, the angle sensor is provided in the vehicle-mounted radar or on a certain face of the vehicle-mounted radar.

14. The vehicle-mounted radar adjusting device according to claim 12, **characterized in that**, the controller is configured to determine whether the angle of the vehicle-mounted radar needs to be adjusted after processing the radar angle change information detected by the angle sensor.

15. The vehicle-mounted radar adjusting device according to claim 14, **characterized in that**, the controller is further used for further determining an adjustment value of the angle of the vehicle-mounted radar to be adjusted when the angle of the vehicle-mounted radar needs to be adjusted, and controlling the adjusting assembly to cause the second mounting plate to rotate to the adjustment value;
wherein the adjustment value is an angle of rotation of the second mounting plate about the axis in the horizontal direction.

16. A vehicle-mounted radar device, **characterized by** comprising:
a vehicle-mounted radar;
the vehicle-mounted radar adjusting device according to any one of claims 1-15, the vehicle-mounted radar being mounted on a face of the second mounting plate facing away from the first mounting plate.

17. The vehicle-mounted radar adjusting device according to claim 16, **characterized in that**, the radar is locked to the second mounting plate through a fastener.
